# EUROPÄISCHE PATENTSCHRIFT

(11) **EP 1 987 722 B1**
(45) Veröffentlichungstag und Bekanntmachung des Hinweises auf die Patenterteilung: **19.05.2010**
(21) Anmeldenummer: 07107356.3
(22) Anmeldetag: 02.05.2007
(51) Int. Cl.: A23G 3/00, A23G 3/36, A23G 3/42, A23G 3/34

(54) **Verfahren zur Herstellung von gegossenen Fondantartikeln**
Method for producing poured fondant articles
Procédé de fabrication d'articles fondants coulés

(43) Veröffentlichungstag der Anmeldung: 05.11.2008
(73) Patentinhaber: Pfeifer & Langen Kommanditgesellschaft, 50933 Köln (DE)
(72) Erfinder: Reidenbach Udo, 41539 Dormagen (DE); Bongers Ulrich, 50169 Kerpen (DE); Ludovici Karl Dr., 51465 Bergisch Gladbach (DE)
(74) Vertreter: von Kreisler Selting Werner

(56) Entgegenhaltungen:
- GB-A- 368 447
- GB-A- 1 236 895
- ANONYMOUS: "On the Theory of Fondants" CCB REVIEW FOR CHOCOLATE, CONFECTIONARY AND BAKERY, Bd. 3, Nr. 1, 1978, Seiten 36-38, XP009088989

## Beschreibung

Gegossene Fondantartikel sind Produkte wie z.B: Fondant-Eier, Fondant-Sterne, Fondant-Baumbehang, Cremehütchen, Pfefferminztaler oder Kokosflocken. Zu deren Herstellung wird im ersten Schritt handelsüblicher Blockfondant durch Erwärmen auf 70 - 90 °C verflüssigt, um den Rohstoff gießfähig zu machen und die Zumischung von Aromen, Farbstoffen, Fett, Genusssäuren und weiteren Zutaten zu ermöglichen. Alternativ kann auch frisch hergestellter Fondant aus einem Fondant-Kocher direkt verwendet werden. Die noch flüssige Mischung wird auf sog. MOGUL-Anlagen in Mulden vergossen, die vorab durch Formenstempel in übertrocknetes Stärkepuder geprägt wurden. Nach einer längeren Lagerungszeit hat sich das Fondantstück durch Abgabe von Feuchte in den umgebenden Stärkepuder so weit verfestigt, dass es aus dem Puder gesiebt und durch Abbürsten von anhaftender Stärke befreit werden kann. Die fertigen Fondantstücke können dann ggf. abschließend kandiert oder mit Schokolade überzogen werden.

Die wesentlichen Nachteile des MOGUL-Verfahrens sind: Das langwierige Nachtrocknen der gegossenen Fondantstücke, die aufwändige Abtrennung und Reinigung der Fondantstücke, die Notwendigkeit der Stärketrocknung, die Vorbereitung der Stärkekästen (Füllen und Prägen), die Stärkeverluste.

Es gibt auch sog. "puderlose" Gießanlagen, die jedoch für gegossene Fondantartikel i.A. nicht einsetzbar sind, da der Trocknungseffekt der Stärke wesentlich für die Verfestigung des Fondantkerns ist. Eine Erhöhung der Trockensubstanz des flüssigen Fondants scheitert daran, dass der optimale Arbeitsbereich üblicher Fondant-Kocher (< 91 % TS) nicht den typischen Trockensubstanzbereich gegossener Fondantartikel (91 - 96 % TS) abdeckt, so dass die Nachtrocknung unverzichtbar ist. In dem betrachteten Trockensubstanzbereich haben schon kleine Änderungen des Trockensubstanzgehaltes einen starken Einfluss auf die Viskosität des Fondants, da diese wesentlich vom Verhältnis von Kristallphase zu Sirupphase abhängt. Grundsätzlich ist es möglich, die Trockensubstanz von Fondant auch dadurch zu Erhöhen, dass das Produkt nach dem Erwärmen und Verflüssigen über einen längeren Zeitraum in einem offenen Gefäß gerührt wird. Dabei kommt es jedoch bedingt durch Temperaturgradienten zu einer weiteren Vergröberung der Korngrößenverteilung und bei längeren Verweilzeiten auch zu einer Verfärbung des Produktes, was besonders für die Herstellung weißer Fondantartikel nachteilig ist.

Bestimmend für die sensorischen Eigenschaften von Fondantartikeln ist die Korngrößenverteilung der Zuckerkristalle. Blockfondant hat eine typische mittlere Korngröße von 10 - 12 µm und eine maximale Korngröße von 25 - 30 µm. Durch die Erwärmung kommt es bereits im ersten Verfahrensschritt zu einer irreversiblen Auflösung eines Teils der besonders feinen, qualitätsgebenden Zuckerkristalle. Zusätzlich kristallisiert beim anschließenden Abkühlen und Nachtrocknen Saccharose aus der übersättigten Umgebungslösung auf die noch vorhandenen Restkristalle auf. Durch diese beiden Effekte kommt es zu einer deutlichen Vergröberung der ursprünglichen Korngrößenverteilung. In gegossenen Fondantartikeln finden sich daher typische mittlere Korngrößen von 15 - 20 µm bei maximalen Korngrößen von 50 - 60 µm. Es ist durch diese prozessbedingte Korngrößenvergröberung im herkömmlichen Verfahren also nicht möglich, Fondantartikel herzustellen, die die Cremigkeit des Ausgangsfondants besitzen. Besonders die maximale Korngröße ist entscheidend für die Sensorik von Fondantartikeln. Bei Anteilen mit einer Korngröße von mehr als 30 µm hinterlassen Fondantartikel einen sandigen, rauen Eindruck auf der Zunge.

Im Mogul-Verfahren hergestellte Fondantartikel weisen häufig durch die Schrumpfung beim Nachtrocknen Unregelmäßigkeiten in der Ausformung auf. Typisch sind etwa "eingezogene Böden", die bei mit Schokolade überzogenen Produkten zu ungleichmäßigen bzw. fehlerhaften Überzügen führen können.

GB-A 1 236 895 offenbart ein Verfahren zur Herstellung von Fondantartikeln bei dem Sukrose-Partikel in einen Sukrose-Syrup suspendiert sind. Dabei wird der Zucker in Wasser gelöst, die Lösung durch Eindampfen konzentriert, sodass eine Übersättigung mit Sukrose eintritt. Danach wird die Lösung abgekühlt.

Das der Erfindung zu Grunde liegende technische Problem bestand darin, ein Verfahren bereitzustellen, mit dem sich die oben genannten Nachteile im Stand der Technik vermeiden lassen.

Gelöst wird das technische Problem durch ein Verfahren zur Herstellung von Fondantartikeln mit folgenden Schritten:
(a) Herstellen einer an Saccharose gesättigten Sirupgrundlage durch Auflösen von Saccharose in Glukosesirup und ggf. Wasser unter Erwärmung und ggf. Eindampfen auf 80 bis 150°C, insbesondere 90 °C bis 130 °C;
(b) Einstellen des Wassergehalts der Sirupgrundlage auf eine Trockensubstanz von 87 bis 92 % und anschließendes Abkühlen auf 60° C bis 120 °C, insbesondere 80°C bis 110°C;
(c) Vermischen der heißen Sirupgrundlage mit fein vermahlener Saccharose, wobei der maximale Korndurchmesser der qualitätsgebenden Kristalle nicht mehr als 50µm beträgt;
(d) Gießen dieser heißen Mischung in Formen;
(e) Abkühlung und Entnahme der Fondantartikel.

Durch Einstellen des Wassergehalts der Sirupgrundlage kann erfindungsgemäß die gewünschte Trockensubstanz des Fondantartikels erreicht werden.

Die zur Herstellung von Fondantartikeln verwendete Saccharose hat eine Korngröße von 60 µm bis 3 mm.

Die Einstellung des Wassergehalts im Schritt (b) erfolgt in der Süßwarenindustrie üblicherweise in einem Kochapparat durch Korrelation mit der Siedetemperatur des Sirups.

Überraschenderweise bleiben die qualitätsgebenden Kristalle in der durch Abkühlen übersättigten Lösung erhalten.

In diesem Schritt können andere Rezepturbestandteilen (Fett, Genusssäuren, Farbstoffe, Aromen, etc.) zugemischt werden.

Durch Einstellen des Wassergehalts der Sirupgrundlage kann erfindungsgemäß die gewünschte Trockensubstanz des Fondantartikels erreicht werden.

Bei gegebenem Mischungsverhältnis von Sirupgrundlage und Kristallen führt eine höhere Trockensubstanz im Sirup zu höheren und eine niedrigere Trockensubstanz im Sirup zu niedrigeren Trockensubstanzen im Endprodukt. Erfindungsgemäß wird die Sirupgrundlage nach dem Erhitzen auf 60° C bis 120 °C, insbesondere auf 80°C bis 110°C abgekühlt werden.

In einer Ausführungsform des erfindungsgemäßen Verfahrens beträgt der maximale Korndurchmesser der feinen qualitätsgebenden Kristalle nicht mehr als 40 µm.

Das erfindungsgemäße Verfahren erlaubt die Herstellung von Fondantartikeln durch Vermischung einer heißen, an Saccharose gesättigten Sirupgrundlage mit fein vermahlenem Zucker und ggf. Aromen, Farbstoffen, Genusssäuren und/oder anderen Komponenten. Die Sirupgrundlage enthält bereits den gesamten Glukosesirupanteil des Endproduktes sowie gelöste Saccharose. Sie wird durch Auflösen von Kristallzucker in Glukosesirup unter Erwärmung ggf. bis zum Siedepunkt hergestellt. Technisch möglich - wenn auch ökonomisch ungünstiger - ist die nachträgliche Zugabe eines Teils des Glukosesirups in getrockneter From gemeinsam mit der fein vermahlenen Saccharose. Die Sirupgrundlage lässt sich in ihrem Wassergehalt so einstellen, dass durch das Vermischen mit dem fein vermahlenen Zucker und den übrigen Komponenten im gegebenen Mischungsverhältnis in einem Schritt die gewünschte, produkttypische Trockensubstanz des jeweiligen Fondantartikels erreicht wird.

Die so erhaltene Masse lässt sich im heißen Zustand in Formen gießen, wobei nun auch der Einsatz von stärkelosen Gießverfahren möglich ist. Selbstverständlich ist auch die Verarbeitung auf MOGUL-Anlagen weiterhin möglich, wobei durch die höhere Trockensubstanz eine deutliche Verkürzung der Verweilzeit im Puder erzielt wird. Auch ist es möglich, die Masse nach teilweisem Abkühlen plastischen Zustand auszuformen. Eine bisher nicht praktikable Produktgestaltung z.B. durch Stempel, Stanze, Düsen oder Extruder wird so ermöglicht. Ebenfalls kann die plastische Fondantmasse ausgewalzt und zu fertigen Stücken geschnitten werden.

Die Sirupgrundlage ist bei ihrer Verarbeitungstemperatur an Saccharose gesättigt und daher nicht der Lage, den beigemischten fein gemahlenen Zucker aufzulösen. Auch die qualitätsgebenden feinsten Kristalle bleiben so erhalten. Durch die nachfolgende Abkühlung beim Vermischen und in den folgenden Prozessschritten kommt es lediglich zu einer Kristallisation von Saccharose aus der übersättigten Umgebungslösung an die vorhandenen Kristalloberflächen. Durch die Einstellung der Korngrößenverteilung des fein gemahlenen Zuckers ist es so möglich, die Korngrößenverteilung im Endprodukt gezielt zu steuern. Bei Verwendung von größeren Anteilen von besonders fein vermahlenem Zucker ist es erstmalig möglich, besonders cremige Produkte herzustellen, bei denen der maximale Korndurchmesser 30 µm nicht überschreitet.

Produkte, die nach dem erfindungsgemäßen Verfahren hergestellt worden sind, zeichnen sich außerdem durch eine besonders hohe Formgenauigkeit aus und außerdem dadurch, dass durch das Schrumpfen beim Nachtrocknen bedingte Fehler nicht auftreten können.

Die Erfindung wird anhand des folgenden Beispiels näher erläutert.

### Beispiel:

300 g Kristallzucker werden zu 60 g Glukosesirup und 65 g Wasser gegeben. Das Gemisch wird zum Sieden erhitzt, wobei sich der gesamte Zucker auflöst. Durch weiteres Eindampfen wird die Siedetemperatur 118° C erreicht, was einem Trockensubstanzgehalt von ca. 89 % entspricht. Nachdem der Sirup auf 100° C abgekühlt ist, werden 150 g fein vermahlene Saccharose eingemischt und das Gemisch unverzüglich in Gießformen gegossen.

## Patentansprüche

1. Verfahren zur Herstellung von Fondantartikeln in folgenden Schritten:
(a) Herstellen einer an Saccharose gesättigten Sirupgrundlage durch Auflösen von Saccharose in Glukosesirup und ggf. Wasser unter Erwärmung und ggf. Eindampfen auf 80° C bis 150°C, insbesondere 90° C bis 130°C;
(b) Einstellen des Wassergehalts der Sirupgrundlage auf eine Trockensubstanz von 87 bis 92 % und anschließendes Abkühlen auf 60° C bis 120 °C, insbesondere 80°C bis 110°C;
(c) Vermischen der heißen Sirupgrundlage mit fein vermahlener Saccharoseö, wobei der maximale Korndurchmesser der qualitätsgebenden Kristalle nicht mehr als 50 µm beträgt;
(d) Gießen der heißen Mischung in Formen;
(e) Abkühlung und Entnahme der Fondantartikel.

2. Verfahren gemäß Anspruch 1, wobei durch Einstellen des Wassergehalts der Sirupgrundlage die gewünschte Trockensubstanz des Fondantartikels erreicht wird.

3. Verfahren gemäß mindestens einem der Ansprüche 1 bis 2, wobei der maximale Korndurchmesser der qualitätsgebenden Kristalle nicht mehr 40 µm beträgt.

4. Verfahren gemäß mindestens einem der Ansprüche 1 bis 3, wobei die Fondantartikel nach teilweisem Abkühlen im plastischen Zustand mit Stempeln, Düsen oder im Extruderverfahren zu Stücken ausgeformt werden, bzw. nach dem Auswalzen zu Stücken geschnitten werden.

## Claims

1. A process for the preparation of fudge articles comprising the following steps:
(a) preparing a sucrose-saturated syrup base by dissolving sucrose in glucose syrup and optionally water with heating and optionally concentrating by evaporation at 80 °C to 150 °C, especially 90 °C to 130 °C;
(b) adjusting the water content of the syrup base to a dry matter content of from 87 to 92%, followed by cooling down to 60 °C to 120 °C, especially 80 °C to 110 °C;
(c) Mixing the hot syrup base with finely ground sucrose, the maximum grain diameter of the quality-determining crystals being not more than 50 µm;
(d) pouring the hot mixture into molds;
(e) cooling and demolding the fudge articles.

2. The process according to claim 1, wherein the desired dry matter content of the fudge article is achieved by adjusting the water content of the syrup base.

3. The process according to at least one of claims 1 to 2, wherein the maximum grain diameter of the quality-determining crystals is not more than 40 µm.

4. The process according to at least one of claims 1 to 3, wherein the fudge articles are converted to a plastic state by partial cooling and then shaped into pieces by means of punches, nozzles or in an extruder process, or cut to pieces after lamination.

## Revendications

1. Procédé de fabrication d'articles fondants selon les étapes suivantes consistant :
(a) à préparer une couche de fond de sirop saturée en saccharose, par dissolution de saccharose dans un sirop de glucose et, le cas échéant, dans de l'eau, en chauffant et, le cas échéant, en évaporant entre 80°C et 150°C, en particulier entre 90°C et 130°C ;
(b) à ajuster la teneur en eau de la couche de fond de sirop, sur une matière sèche de 87 % à 92 % et, ensuite, à refroidir entre 60°C et 120°C, en particulier entre 80°C et 110°C ;
(c) à mélanger la couche de fond de sirop chaude avec du saccharose finement moulu, où le diamètre de grain maximum des cristaux donnant la qualité n'est pas supérieur à 50 µm ;
(d) à couler le mélange chaud dans des moules ; (e)à refroidir et à extraire les articles fondants.

2. Procédé selon la revendication 1, où la matière sèche de l'article fondant, qui est souhaitée, est obtenue en ajustant la teneur en eau de la couche de fond de sirop.

3. Procédé selon au moins l'une des revendications 1 et 2, où le diamètre de grain maximum des cristaux donnant la qualité n'est pas supérieur à 40 µm.

4. Procédé selon au moins l'une des revendications 1 à 3, où les articles fondants, après refroidissement partiel, à l'état plastique, sont façonnés en morceaux, avec des poinçons, des buses ou au cours du processus d'extrusion, ou bien, après le laminage, sont découpés en morceaux.
